# FASCICULE DE BREVET EUROPEEN

(11) **EP 2 580 085 B1**
(45) Date de publication et mention de la délivrance du brevet: **09.04.2014**
(21) Numéro de dépôt: 11728358.0
(22) Date de dépôt: 06.06.2011
(51) Int. Cl.: B60L 11/18

(54) **CIRCUIT ELECTRIQUE MIXTE A FONCTION D'ONDULEUR ET DE CONVERTISSEUR ALTERNATIF-CONTINU ET PROCEDE DE DIAGNOSTIC D'UN TEL CIRCUIT**
ELEKTRISCHER MISCHKREIS MIT INVERTERFUNKTION UND AC/DC-WANDLERFUNKTION SOWIE DIAGNOSEVERFAHREN FÜR EINE DERARTIGE SCHALTUNG
MIXED ELECTRICAL CIRCUIT WITH INVERTER FUNCTION AND AC/DC CONVERTER FUNCTION AND METHOD OF DIAGNOSIS OF SUCH A CIRCUIT

(30) Priorité: 14.06.2010 FR 1002506
(43) Date de publication de la demande: 17.04.2013
(73) Titulaire: Renault S.A.S., 92100 Boulogne-Billancourt (FR)
(72) Inventeur: BRIANE, Benoît, F-78280 Guyancourt (FR); LOUDOT, Serge, F-91190 Villiers le Bâcle (FR)
(86) Numéro de dépôt international: PCT/FR2011/051274
(87) Numéro de publication internationale: WO 2011/157922

(56) Documents cités:
- DE-A1- 4 107 391
- DE-A1-102004 040 228
- FR-A1- 2 934 217
- JP-A- 6 292 304

## Description

La présente invention concerne de manière générale le diagnostic d'un système mixte présentant une fonction de pilotage d'un moteur électrique et une fonction de charge d'une batterie d'accumulateurs.

Elle concerne plus particulièrement un circuit électrique mixte à fonction d'onduleur et de convertisseur altèrnatif-continu comprenant :
- quatre bras en parallèle présentant des extrémités communes, dont un bras accumulateur équipé d'un condensateur et trois bras interrupteurs chacun équipés de deux couples d'interrupteurs hacheurs/diodes branchés en série, de part et d'autre d'un point milieu,
- au moins une inductance,
- au moins trois interrupteurs-relais pour connecter, en mode onduleur, les points milieu desdits trois bras interrupteurs à des premières extrémités de trois enroulements d'un moteur électrique triphasé via trois circuits de phase, les secondes extrémités des trois enroulements entre eux et les extrémités desdits trois bras interrupteurs aux bornes d'une batterie d'accumulateurs, et pour connecter, en mode convertisseur alternatif-continu, les points milieu d'un premier et d'un deuxième bras interrupteurs à un connecteur adapté à être branché à une source de tension monophasée et le point milieu d'un troisième bras interrupteur à la batterie d'accumulateurs par l'intermédiaire de ladite inductance, et
- une unité de pilotage desdits interrupteurs-relais, équipée de moyens de mesure de l'intensité du courant passant dans chaque circuit de phase et de la différence de potentiels aux bornes dudit condensateur.

Elle concerne également un procédé de diagnostic des interrupteurs-relais d'un tel circuit.

L'invention trouve notamment une application dans le domaine automobile, pour les véhicules électriques ou hybrides.

### ARRIERE-PLAN TECHNOLOGIQUE

Dans un circuit électrique mixte du type précité, la fonction onduleur permet de transformer une tension continue provenant de la batterie d'accumulateurs en une tension alternative afin d'alimenter le moteur électrique triphasé, tandis que la fonction convertisseur alternatif-continu (ou chargeur) permet de transformer une tension alternative provenant de la source de tension monophasée (en l'espèce la borne électrique sur laquelle le véhicule est branché) en une tension continue afin de recharger la batterie d'accumulateurs.

Les interrupteurs-relais permettent de sélectionner l'une ou l'autre des fonctions onduleur et convertisseur alternatif-continu.

Dans un tel circuit électrique mixte, il est primordial de s'assurer que ces interrupteurs-relais fonctionnent correctement. En effet, si l'un de ces interrupteurs-relais restait bloqué dans un état non désiré, il y aurait un fort risque de court-circuit pouvant entraîner la destruction des différents composants du circuit.

Pour contrôler la position de ces interrupteurs-relais, il est connu de rapporter sur le circuit électrique mixte des éléments électriques de mesure de la différence de potentiels aux bornes des interrupteurs-relais.

Ces éléments électriques ajoutés sur le circuit électrique mixte sont toutefois onéreux. Ils compliquent en outre l'architecture électrique de ce circuit, ce qui contribue à le rendre moins fiable.

### OBJET DE L'INVENTION

Afin de remédier aux inconvénients précités de l'état de la technique, la présente invention propose un circuit électrique mixte dans lequel le contrôle de l'état des interrupteurs-relais est réalisé sans ajout de composants supplémentaires, en modifiant seulement l'unité de pilotage.

Plus particulièrement, on propose selon l'invention un circuit électrique mixte tel que défini dans l'introduction, dans lequel l'unité de pilotage est adaptée à déduire directement des intensités et de la différence de potentiels mesurées les états fermés ou ouverts des interrupteurs-relais.

Pour assurer sa fonction onduleur, le circuit électrique mixte comporte nativement des moyens de mesure de l'intensité du courant passant dans chaque circuit de phase et des moyens de mesure de la différence de potentiels aux bornes du condensateur.

Grâce à l'invention, avant d'alimenter le moteur ou de mettre la batterie d'accumulateurs en charge, l'unité de pilotage est adaptée à utiliser ces moyens de mesure pour vérifier que les intensités et différence de potentiels mesurées présentent des valeurs normales et que, par conséquent, les interrupteurs-relais fonctionnent correctement. En revanche, si les valeurs mesurées sont anormales, l'unité de pilotage pourra alors suspendre l'alimentation électrique du moteur ou la mise en charge de la batterie d'accumulateurs jusqu'à ce que l'interrupteur-relais déficient soit remplacé.

Préférentiellement, l'inductance est formée par l'un des trois enroulements du moteur électrique triphasé.

Avantageusement, les deux premiers interrupteurs-relais qui connectent, en mode convertisseur alternatif-continu, les points milieu des premier et deuxième bras interrupteurs audit connecteur sont des relais bistables, aptes à présenter un état ouvert et un état fermé.

Dans un premier mode de réalisation de l'invention, le troisième interrupteur-relais est un relais tristable, apte à présenter un état ouvert et deux états fermés, dont un premier état fermé pour connecter la batterie d'accumulateurs à l'une des extrémités des trois bras interrupteurs et un second état fermé pour connecter la batterie d'accumulateurs au point milieu du troisième bras interrupteur par l'intermédiaire de ladite inductance et d'un troisième desdits circuits de phase.

Dans ce mode, le procédé de diagnostic de l'état des interrupteurs-relais comporte, lors du passage en mode onduleur, les étapes consistant à :
a) commander les deux premiers interrupteurs-relais en état fermé et le troisième interrupteur-relais en premier état fermé,
b) attendre que le condensateur se charge au moins en partie,
c) mesurer intensité du courant passant dans le troisième circuit de phase et la différence de potentiels aux bornes du condensateur, et en déduire un diagnostic de fonctionnement du troisième interrupteur-relais, et
d) mesurer les intensités du courant passant dans les deux premiers circuits de phase et en déduire un diagnostic de fonctionnement des deux premiers interrupteurs-relais.

Il comporte en outre, lors du passage en mode convertisseur alternatif-continu, les étapes consistant à :
a) commander les deux premiers interrupteurs-relais en état ouvert et le troisième interrupteur-relais en second état fermé,
b) attendre que le condensateur se charge au moins en partie,
c) mesurer l'intensité du courant passant dans le troisième circuit de phase et en déduire un diagnostic de fonctionnement du troisième interrupteur-relais,
d) mesurer l'intensité du courant passant dans les deux premiers circuits de phase et en déduire un diagnostic de fonctionnement des deux premiers interrupteurs-relais.

Avantageusement, si, à l'étape c), l'intensité mesurée est nulle, on mesure également la différence de potentiels aux bornes du condensateur pour en déduire si le troisième interrupteur-relais est bloqué en état ouvert ou en premier état fermé.

Dans un second mode de réalisation du circuit électrique mixte, le troisième interrupteur-relais est un relais bistable, apte à présenter un état ouvert et un état fermé pour connecter la batterie d'accumulateurs à l'une des extrémités des trois bras interrupteurs, et il est prévu un quatrième relais bistable, apte à présenter un état ouvert et un état fermé pour connecter la batterie d'accumulateurs au point milieu du troisième bras interrupteur par l'intermédiaire de la première inductance et d'un troisième desdits circuits de phase.

Dans ce mode, le procédé de diagnostic de l'état des interrupteurs-relais comporte, lors du passage en mode onduleur, les étapes consistant à :
a) commander la fermeture des trois premiers interrupteurs-relais et l'ouverture du quatrième interrupteur-relais,
b) attendre que le condensateur se charge au moins en partie,
c) mesurer l'intensité du courant passant dans le troisième circuit de phase et la différence de potentiels aux bornes du condensateur, et en déduire un diagnostic de fonctionnement du troisième interrupteur-relais,
d) mesurer l'intensité du courant passant dans les deux premiers circuits de phase et en déduire un diagnostic de fonctionnement des deux premiers interrupteurs-relais,
e) comparer l'intensité du courant passant dans le troisième circuit de phase et l'intensité du courant passant dans l'un des deux premiers circuits de phase et en déduire un diagnostic de fonctionnement du quatrième interrupteur-relais.

Il comporte en outre, lors du passage en mode convertisseur alternatif-continu, les étapes consistant à :
a) commander l'ouverture des trois premiers interrupteurs-relais et la fermeture du quatrième interrupteur-relais,
b) attendre que le condensateur se charge au moins en partie,
c) mesurer la différence de potentiels aux bornes du condensateur et en déduire un diagnostic de fonctionnement du quatrième interrupteur-relais,
d) mesurer l'intensité du courant passant dans le troisième circuit de phase et en déduire un diagnostic de fonctionnement du troisième interrupteur-relais,
e) mesurer l'intensité du courant passant dans les deux premiers circuits de phase et en déduire un diagnostic de fonctionnement des deux premiers interrupteurs-relais.

Avantageusement, lors du passage en mode convertisseur alternatif-continu, le connecteur est déconnecté de toute source de tension monophasée. Ainsi, grâce à l'invention, le diagnostic de fonctionnement des interrupteurs-relais ne nécessite pas la connexion du circuit électrique à la borne électrique, mais peut être réalisé de manière autonome.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique d'un circuit électrique à fonction de convertisseur alternatif-continu,
- la figure 2 est une vue schématique d'un circuit électrique à fonction d'onduleur,
- la figure 3 est une vue schématique d'un circuit électrique mixte selon l'invention, équipé de trois interrupteurs-relais à diagnostiquer,
- la figure 4 est une vue schématique du circuit électrique mixte de la figure 3, dans lequel la fonction onduleur est sélectionnée,
- la figure 5 est une vue schématique du circuit électrique mixte de la figure 3, dans lequel la fonction convertisseur alternatif-continu est sélectionnée,
- la figure 6 est une vue schématique d'une variante de réalisation du circuit électrique mixte de la figure 3, équipé de quatre interrupteurs-relais à diagnostiquer, dans lequel la fonction onduleur est sélectionnée,
- la figure 7 est une vue schématique du circuit électrique mixte de la figure 6, dans lequel la fonction convertisseur alternatif-continu est sélectionnée,
- les figures 8 à 11 sont des diagrammes illustrant les étapes des procédés de diagnostic des interrupteurs-relais des circuits électriques mixtes respectivement représentés sur les figures 4 à 7.

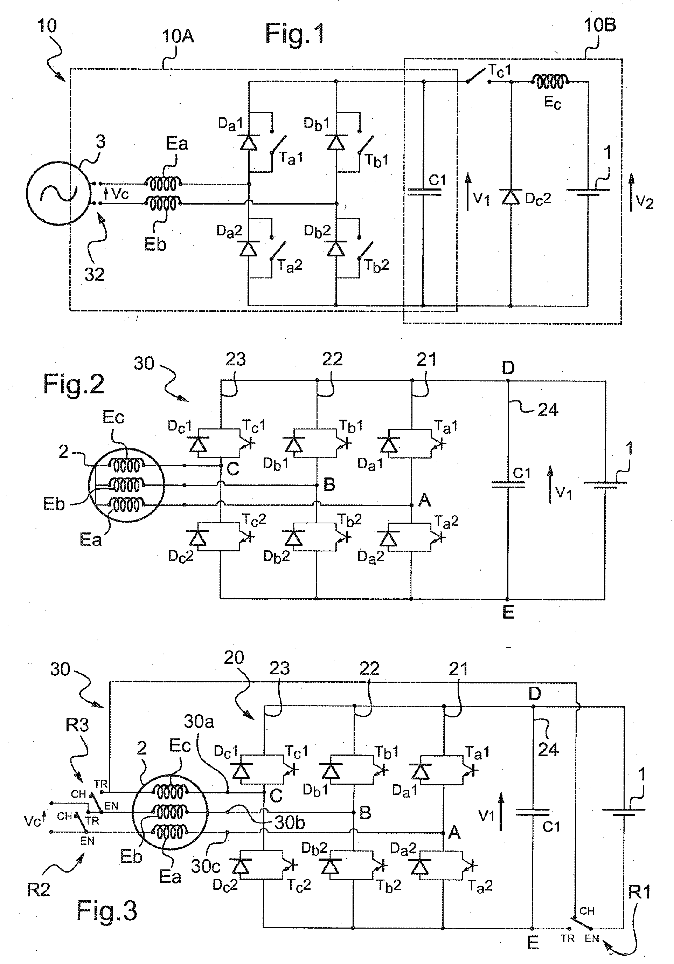

Sur la figure 3, on a représenté un moteur électrique triphasé 2, une batterie d'accumulateurs 1 et un circuit électrique mixte 30 pouvant présenter une fonction onduleur pour piloter le moteur électrique 2 et une fonction convertisseur alternatif-continu pour piloter la charge de la batterie d'accumulateurs 1.

Le moteur électrique triphasé 2 est ici un moteur de véhicule automobile à propulsion électrique ou hybride.

On distingue deux modes dans le fonctionnement de ce véhicule automobile, dont un mode de traction du véhicule et un mode de charge de la batterie. En mode traction, la fonction onduleur du circuit électrique mixte 30 est sélectionnée de manière que la batterie d'accumulateurs 1 puisse alimenter le moteur électrique 2. En mode charge, le circuit électrique mixte 30 est connecté à une borne d'alimentation électrique 3 et la fonction convertisseur alternatif-continu du circuit électrique mixte 30 est sélectionnée de manière à recharger la batterie d'accumulateurs 1.

Sur la figure 3, le circuit électrique mixte 30 est représenté avec ses deux bornes d'entrée D et E et ses trois bornes de sortie A, B, C.

Il comprend, montés en parallèle entre ses bornes d'entrée D et E, trois bras interrupteurs 21, 22, 23 et un bras accumulateur 24.

Le bras accumulateur 24 comporte une capacité de filtrage formée ici par un condensateur C1. Ce condensateur C1 présente un temps de charge connu, correspondant au triple du temps nécessaire pour atteindre 63% de sa tension maximale de charge.

Chaque bras interrupteur 21, 22, 23 comporte en série deux groupes interrupteurs hacheurs/diodes (par exemple des transistors MOS avec leurs diodes inverses) référencés Ta1/Da1, Ta2/Da2, Tb1/Db1, Tb2/Db2, Tc1/Dc1 et Tc2/Dc2 respectivement. Chaque diode Da1-Dc2 est montée en inverse relativement au sens normal de conduction de chaque interrupteur hacheur Ta1 - Tc2.

Les bornes de sortie A, B, C correspondent aux points milieu de ces bras interrupteurs 21, 22, 23. Elles sont respectivement connectées à des premières extrémités des trois enroulements Ea, Eb, Ec du moteur électrique triphasé 2, via trois circuit de phase 30a, 30b, 30c.

Le circuit électrique mixte 30 comporte en outre trois interrupteurs-relais, appelés relais R1, R2, R3.

Ces trois relais R1, R2, R3 sont agencés pour connecter, en mode onduleur (ou « traction »), les secondes extrémités des trois enroulements Ea, Eb, Ec du moteur électrique triphasé 2 entre eux et pour connecter les bornes d'entrée D, E aux bornes de la batterie d'accumulateurs 1. Ils sont en outre agencés pour connecter, en mode convertisseur alternatif-continu (ou « charge »), les bornes de sortie A, B d'un premier et d'un deuxième bras interrupteurs 21, 22 à la borne d'alimentation électrique 3 et la borne de sortie C d'un troisième bras interrupteur 23 à la batterie d'accumulateurs 1 par l'intermédiaire d'une inductance.

Cette inductance est ici avantageusement formée par l'un des enroulements Ec du moteur. En mode convertisseur alternatif-continu, le moteur n'est en effet pas utilisé pour propulser le véhicule, si bien que ses enroulements peuvent être utilisés comme inductances. En l'occurrence, ses deux autres enroulements Ea et Eb sont également utilisés comme inductances et sont à cet effet interposées, en mode convertisseur alternatif-continu, entre les bornes de sortie A, B et la borne d'alimentation électrique 3.

Pour brancher les bornes de sortie A, B à la borne d'alimentation électrique 3, le circuit électrique mixte comporte en particulier un connecteur 32, ici formé par une fiche électrique dont les deux bornes sont connectées aux deux enroulements Ea, Eb du moteur 2 et sont adaptées à être engagées dans une prise de courant de la borne d'alimentation électrique 3.

Chaque relais. R1, R2, R3 présente un plot d'entrée EN et deux plots de sortie CH et TR et peut être mis en état de "charge" (plot EN relié au plot CH) ou de "traction" (plot EN relié au plot TR).

Le premier relais R1 comporte trois états stables. Son plot d'entrée EN est relié au pôle négatif de la batterie 1, son plot de charge CH est relié à l'enroulement Ec du moteur 2, et son plot de traction TR est relié à la borne d'entrée E du circuit électrique mixte 30. Il présente deux états fermés dans lequel son plot d'entrée EN est connecté soit au plot de charge CH, soit au plot de traction TR, et un état ouvert dans lequel son plot d'entrée EN n'est connecté ni au plot de charge CH, ni au plot de traction TR.

Le second relais R2 comporte deux états stables. Son plot d'entrée EN est relié à l'enroulement Ea du moteur 2, son plot de traction TR est relié à l'enroulement Eb du moteur 2, et son plot de charge CH est relié à la masse. Il présente donc un état fermé dans lequel son plot d'entrée EN est connecté au plot de traction TR, et un état ouvert.

Le troisième relais R3 comporte également deux positions stables. Son plot d'entrée EN est relié à l'enroulement Eb du moteur 2, son plot de traction TR est relié à l'enroulement Ec du moteur 2, et son plot de charge CH est relié à la masse. Il présente donc un état fermé dans lequel son plot d'entrée EN est connecté au plot de traction TR, et un état ouvert.

Ici, ce circuit électrique mixte 30 permet à lui seul d'assurer une fonction d'onduleur et de convertisseur alternatif-continu.

Les groupes interrupteurs hacheurs/diodes des bras interrupteur 21, 22, 23 sont alors utilisées de manière différente selon que l'une ou l'autre de ces deux fonctions est sélectionnée.

Lorsque les trois relais R1, R2, R3 sont en mode "traction", on se retrouve dans la configuration classique de fonctionnement représentée sur la figure 2, où le moteur 2 est alimenté en tension triphasée par le circuit électrique mixte 30 qui assure le hachage de la tension continue délivrée par la batterie 1.

En revanche, lorsque les trois relais R1, R2, R3 sont en mode "charge" et que le connecteur 32 est branché sur la borne d'alimentation électrique 3, on se retrouve dans une configuration telle que celle représentée sur la figure 1, en mode convertisseur alternatif-continu.

Pour bien comprendre le fonctionnement du circuit électrique mixte 30 en mode charge, on a seulement représenté sur cette figure 1 les composants électriques du circuit électrique mixte qui sont alors utilisés, et on les a agencés de manière plus révélatrice de leur fonction de convertisseur alternatif-continu.

Les diodes Da1, Da2, Db1, Db2 forment alors un pont de diodes qui assure, avec leurs interrupteurs-hacheurs Ta1, Ta2, Tb1, Tb2, une fonction de redresseur-survolteur. Les périodes de fermeture et d'ouverture de ces interrupteurs-hacheurs sont asservies afin de réguler la tension de sortie V1 aux bornes du condensateur C1.

L'interrupteur hacheur Tc1 et la diode Dc2 forment quant à eux, en combinaison avec le condensateur C1 et l'enroulement Ec du moteur 2, un circuit à fonction dévolteur (ou abaisseur de tension) qui délivre une tension continue V2 aux bornes de la batterie 1. Ainsi, lorsque l'interrupteur Tc1 est fermé, un courant circule dans le condensateur C1, dans l'enroulement Ec et dans la batterie d'accumulateurs 1. Lorsque l'interrupteur Tc1 est ouvert, un courant généré par l'inductance Ec circule dans le condensateur C1 et dans la batterie 1. Un asservissement approprié des périodes d'ouverture et de fermeture de l'interrupteur Tc1 permet alors de contrôler avec précision le courant traversant la batterie 1. La commande peut aussi être réalisée en utilisant les interrupteurs Tc1 et Tc2 en redressement synchrone. L'interrupteur Tc2 est alors piloté en remplacement de la diode Dc2.

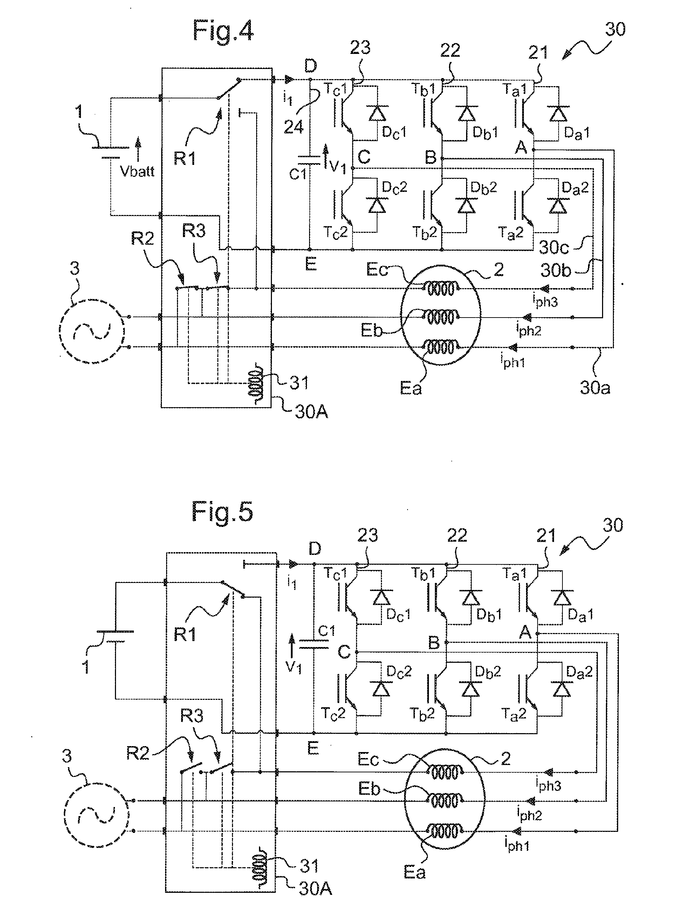

Sur la figure 4, on a représenté le chargeur-onduleur 30 de la figure 3, équipé en outre de son unité de pilotage 30A. Cette unité de pilotage 30A est adaptée à commander les hacheurs Ta1 - Tc2 ainsi que les relais R1 - R3.

Elle est à cet effet équipée de moyens de mesure de l'intensité iₚₕ₁, iₚₕ₂, iₚₕ₃ du courant passant dans chaque circuit de phase 30a, 30b, 30c et de la différence de potentiels V1 aux bornes du condensateur C1, de moyens de mémorisation de ces valeurs d'intensité et de différence de potentiels, et de moyens de pilotage de ces relais R1 - R3.

Les moyens de mesure sont ici formés des sondes de courant et de tensions, implantées de manière native dans le circuit électrique mixte 30.

Les moyens de mémorisation sont quant à eux formés par une mémoire vive (RAM).

Enfin, les moyens de pilotage numériques, par exemple un microcontrôleur, comportent une mémoire morte dans laquelle est enregistré un procédé de diagnostic des relais, et un processeur pour commander des éléments de commande des relais R1 - R3.

Telle que représentée sur la figure 4, cette unité de pilotage 30A comporte un unique élément de commande 31 (par exemple une porte TTL) pour piloter l'ensemble des relais R1 - R3. Les trois relais R1 - R3 sont ainsi pilotés simultanément.

En variante, on pourra prévoir trois éléments de commande pour piloter indépendamment chaque relais R1 - R3.

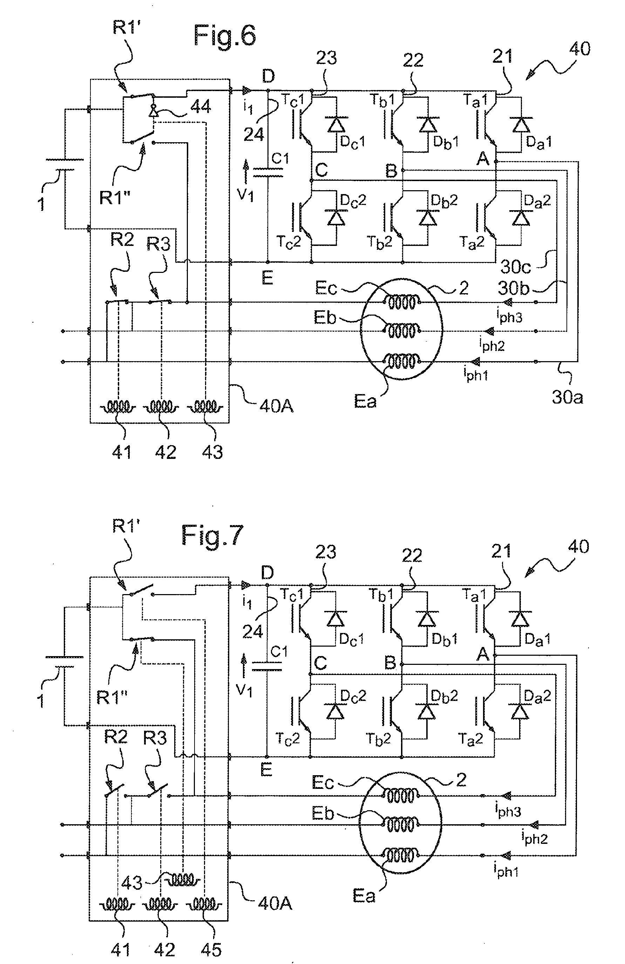

Dans un second mode de réalisation de l'invention représenté sur les figures 6 et 7, le circuit électrique mixte 40 pourra comporter, en lieu et place du relais R1 précité, deux relais R1' et R1" bistables distincts.

Dans ce mode de réalisation, le relais R1' pourra présenter un état fermé pour connecter la batterie d'accumulateurs 1 à la borne d'entrée D et un état ouvert. Le relais R1" pourra quant à lui présenter un état fermé pour connecter la batterie d'accumulateurs 1 à la borne de sortie C par l'intermédiaire de l'enroulement Ec du moteur et un état ouvert.

Préférentiellement, l'unité de pilotage 40A comportera alors quatre éléments de commande distincts 41, 42, 43, 45 chacun adapté à piloter l'un des relais R1' - R3 (figure 7). En variante, elle pourra comporter trois éléments de commande 41, 42, 43, dont l'un sera équipé d'un inverseur 44 et sera ainsi adapté à piloter simultanément les deux relais R1' et R1" (figure 6). En variante encore, elle pourra comporter un unique élément de commande muni d'un inverseur, de manière à être adaptée à piloter simultanément les quatre relais R1' - R3.

Quoi qu'il en soit, selon une caractéristique particulièrement avantageuse de l'invention, l'unité de pilotage 30A ; 40A est adaptée à déduire directement, en fonction des intensités iₚₕ₁, iₚₕ₂, iₚₕ₃ du courant traversant les circuits de phase 30a, 30b, 30c et de la différence de potentiels V1 aux bornes du condensateur C1, les états des relais R1, R2, R3 ; R1', R1".

Il peut en effet arriver qu'un relais ne réponde pas à sa commande et reste bloqué dans un état fermé ou ouvert, potentiellement dangereux vis-à-vis de l'intégrité de l'ensemble des composants électriques du véhicule. Grâce à l'invention, l'unité de pilotage 30A ; 40A sera alors adaptée à détecter ce dysfonctionnement et à agir en conséquence.

### Procédé de pilotage

Le procédé de pilotage et de diagnostic des relais R1 - R3 par l'unité de pilotage 30A sera tout d'abord décrit en référence au circuit électrique mixte 30 représenté sur les figures 4 et 5.

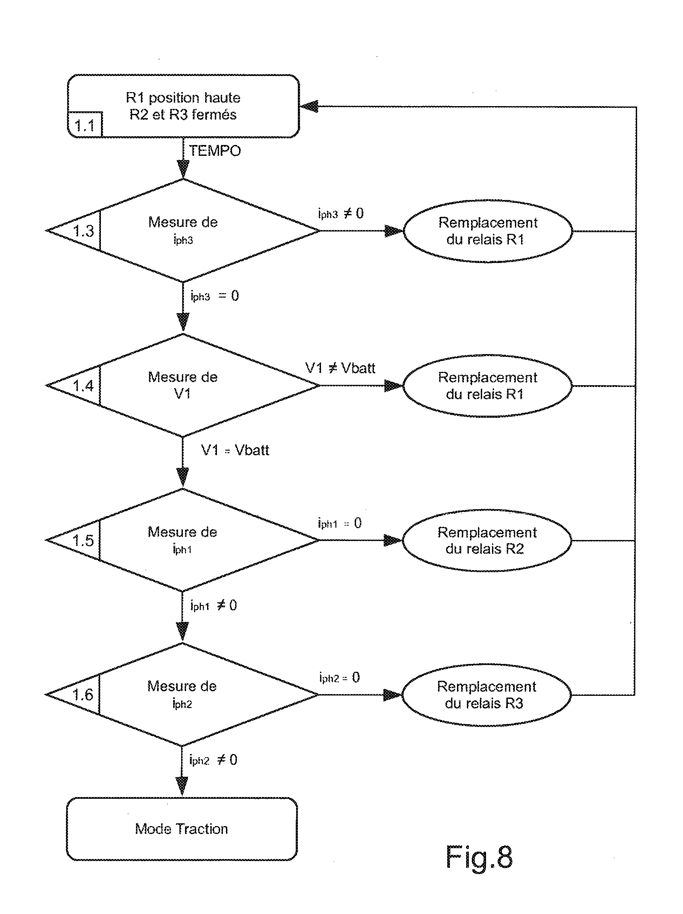

Plaçons nous tout d'abord dans le cas où l'on souhaite sélectionner le mode traction (figure 4). Le procédé de diagnostic, illustré sur la figure 8, comporte alors six étapes successives permettant de déterminer si les trois relais R1, R2, R3 fonctionnent correctement.

### Etape 1.1

Au cours d'une première étape, l'unité de pilotage commande la fermeture des relais R2 et R3 et la mise en position haute du relais R1 pour les positionner en mode traction.

### Etape 1.2

Puis, l'unité de pilotage se met en attente durant une durée déterminée supérieure ou égale au temps de charge du condensateur C1.

A ce stade, on comprend que si le relais R1 atteint sa position haute, le condensateur C1 se charge directement grâce à la batterie 1. Si le relais R1 ne fonctionne plus et reste bloqué en état ouvert, le condensateur C1 ne se charge pas. Enfin, si le relais R1 ne répond pas et reste en position basse, le condensateur C1 se charge grâce à la batterie 1, via l'enroulement Ec du moteur 2 et le circuit de phase 30c (ainsi qu'éventuellement via les circuits de phase 30a et 30b si les relais R2 et R3 sont correctement fermés).

L'unité de pilotage mesure, pour tester le relais R1, l'intensité iₚₕ₃ du courant circulant dans le circuit de phase 30c durant la phase de charge du condensateur C1.

### Etape 1.3

Passé ce temps d'attente, l'unité de pilotage analyse l'intensité iₚₕ₃ du courant ayant circulé dans le circuit de phase 30c durant la phase de charge du condensateur C1. Si l'intensité iₚₕ₃ analysée est non nulle, l'unité de pilotage indique à l'utilisateur que le relais R1 n'est plus fiable et qu'il doit être remplacé. En effet, cette intensité non nulle signifie que le relais R1 est resté bloqué en position basse.

En revanche, si l'intensité iₚₕ₃ analysée est nulle, l'unité de pilotage procède au test de l'étape 1.4.

En variante, on pourra prévoir, si le circuit électrique mixte 30 est équipé de moyens de mesure de l'intensité i₁ du courant passant par la borne d'entrée D, de vérifier que le relais R1 n'est pas resté bloqué en position basse en contrôlant que l'intensité i₁ est non nulle.

### Etape 1.4

Toujours pour tester le relais R1, l'unité de pilotage mesure la différence de potentiels V1 aux bornes du condensateur C1. Si cette différence de potentiels V1 est sensiblement différente (à au moins 10 % près) de la différence de potentiels Vbatt aux bornes de la batterie 1, elle indique à l'utilisateur que le relais R1 n'est plus fiable et qu'il doit être remplacé. En effet, une telle différence de potentiels signifierait que le condensateur C1 n'a pas pu se charger car le relais R1 est resté bloqué en état ouvert.

En revanche, si la différence de potentiels V1 est égale à la différence de potentiels Vbatt aux bornes de la batterie 1, l'unité de pilotage procède au test de l'étape 1.5.

En variante, on pourra prévoir que l'unité de pilotage mesure la variation de la différence de potentiels V1 et qu'elle diagnostique le fonctionnement du relais R1 en fonction de cette variation dV1/dt. Cette variation sera en effet nulle si le relais R1 est bloqué en état ouvert. Elle sera au contraire non nulle si le relais R1 fonctionne.

### Etape 1.5

Pour tester le relais R2, l'unité de pilotage pilote les interrupteurs hacheurs Tb1 et Ta2 en position fermée durant un court instant, ce qui a pour effet de faire circuler un courant depuis la batterie 1 via l'interrupteur hacheur Tb1, le circuit de phase 30b, l'enroulement Eb, le relais R2 (si ce dernier est correctement fermé), l'enroulement Ea, le circuit de phase 30a et l'interrupteur hacheur Ta2.

Elle mesure ensuite l'intensité iₚₕ₁ du courant circulant dans le circuit de phase 30a.

Si l'intensité iₚₕ₁ mesurée est nulle, l'unité de pilotage indique à l'utilisateur que le relais R2 n'est plus fiable et qu'il doit être remplacé. En effet, cette intensité nulle signifie que le relais R2 est resté ouvert.

En revanche, si l'intensité iₚₕ₁ mesurée est non nulle, l'unité de pilotage procède au test de l'étape 1.6.

Ici pour mémoire, ce sont les interrupteurs hacheurs Tb1 et Ta2 qui sont pilotés en position fermée et non les interrupteurs hacheurs Tb2 et Ta1, de manière que si le relais R2 est resté ouvert, aucun risque de court-circuit n'apparaît.

En variante, à cette étape, on pourrait prévoir que l'unité de pilotage mesure la variation de l'intensité iₚₕ₁ et qu'elle diagnostique le fonctionnement du relais R2 en fonction de cette variation diₚₕ₁ /dt. Cette variation sera en effet nulle si le relais R2 est bloqué en état ouvert. Elle sera au contraire non nulle si le relais R2 fonctionne.

### Etape 1.6

Pour tester le relais R3, l'unité de pilotage procède de manière homologue, en pilotant les interrupteurs-hacheurs Tc1 et Tb2 en position fermée durant un court instant, ce qui a pour effet de faire circuler un courant depuis la batterie 1 via l'interrupteur hacheur Tc1, le circuit de phase 30c, l'enroulement Ec, le relais R3 (si ce dernier est correctement fermé), l'enroulement Eb, le circuit de phase 30b et l'interrupteur hacheur Tb2.

Elle mesure ensuite l'intensité iₚᵣ₂ ou la variation diₚₕ₂ /dt du courant circulant dans le circuit de phase 30b.

Si l'intensité iₚₕ₂ ou la variation diₚₕ₂ /dt mesurée est nulle, l'unité de pilotage indique à l'utilisateur que le relais R3 n'est plus fiable et qu'il doit être remplacé.

En revanche, si l'intensité iₚₕ₂ ou la variation diₚₕ₂ /dt mesurée est non nulle, l'unité de pilotage indique à l'utilisateur que l'ensemble des relais est fiable et qu'il peut donc procéder à la mise en route du moteur triphasé 2, en mode traction.

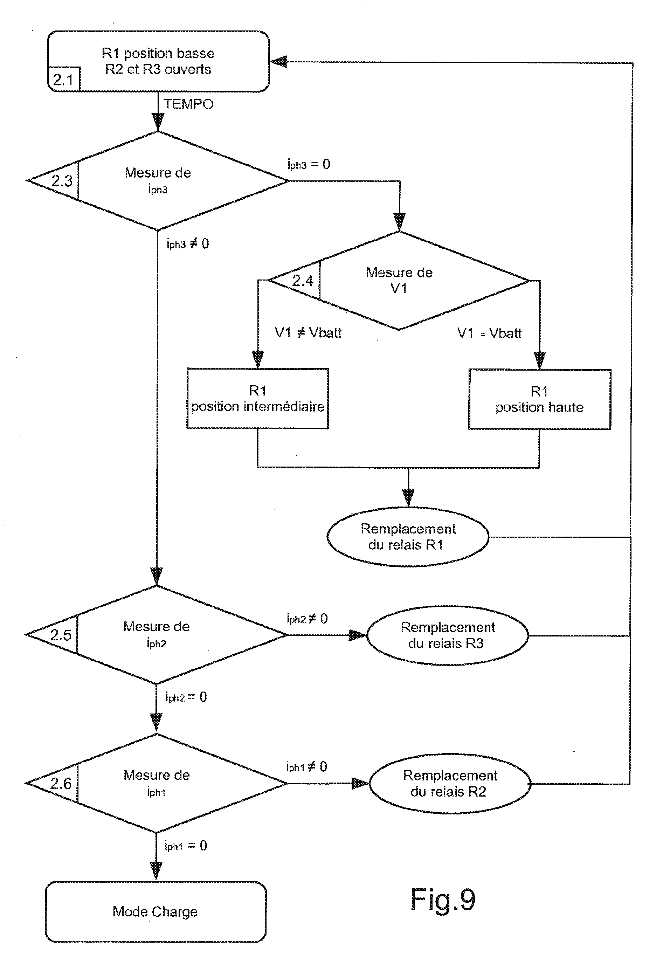

Plaçons nous maintenant dans le cas où l'on souhaite sélectionner le mode charge (figure 5). Le procédé de diagnostic, illustré sur la figure 9, comporte alors six étapes permettant de déterminer si les trois relais R1, R2, R3 fonctionnent correctement.

Préférentiellement, ce procédé est mis en oeuvre avant que le circuit électrique mixte 30 ne soit branché sur la borne d'alimentation électrique 3.

### Etape 2.1

Au cours d'une première étape, l'unité de pilotage commande l'ouverture des relais R2 et R3 et la mise en position basse du relais R1, pour les positionner en mode charge.

### Etape 2.2

Puis, l'unité de pilotage se met en attente durant une durée supérieure ou égale au temps de charge du condensateur C1.

A ce stade, on comprend que si le relais R1 atteint sa position basse, le condensateur C1 se charge grâce à la batterie 1, via l'enroulement Ec du moteur 2 et le circuit de phase 30c (ainsi qu'éventuellement via les circuits de phase 30a et 30b si les relais R2 et R3 sont restés fermés). En revanche, si le relais R1 ne fonctionne plus et reste ouvert, le condensateur C1 ne se charge pas. Si le relais R1 est resté bloqué en position haute, le condensateur C1 se charge directement grâce à la batterie 1.

L'unité de pilotage mesure, pour tester le relais R1, l'intensité iₚₕ₃ du courant circulant dans le circuit de phase 30c durant la phase de charge du condensateur C1.

### Etape 2.3

Passé ce temps d'attente, l'unité de pilotage analyse l'intensité iₚₕ₃ du courant ayant circulé dans le circuit de phase 30c durant la phase de charge du condensateur C1. Si l'intensité iₚₕ₃ analysée est non nulle, l'unité de pilotage procède au test de l'étape 2.5. En effet, cette intensité non nulle signifie que le relais R1 fonctionne et a atteint sa position basse.

En revanche, si l'intensité iₚₕ₃ analysée est nulle, l'unité de pilotage indique à l'utilisateur que le relais R1 n'est plus fiable et qu'il doit être remplacé. Elle peut à cet effet procéder au test de l'étape 2.4 afin de déterminer si le relais R1 est ouvert ou s'il est bloqué en position haute.

### Etape 2.4

Cette étape 2.4 est donc une étape facultative qui permet, si l'unité de pilotage a détecté que le relais R1 n'est pas en position basse, de contrôler sa position exacte afin de déterminer si un courant potentiellement dangereux a circulé dans le circuit électrique mixte 30.

Pour cela, l'unité de pilotage mesure la différence de potentiels V1 aux bornes du condensateur C1. Si cette différence de potentiels V1 est sensiblement égale à la différence de potentiels Vbatt aux bornes de la batterie 1, elle indique à l'utilisateur que le relais R1 est resté bloqué en position haute et qu'un courant potentiellement dangereux a chargé le condensateur C1.

En revanche, si la différence de potentiels V1 est différente de la différence de potentiels Vbatt aux bornes de la batterie 1, l'unité de pilotage indique à l'utilisateur que le relais R1 est resté ouvert.

L'unité de pilotage mesure l'intensité iₚₕ₂ du courant circulant dans le circuit de phase 30b durant la phase de charge du condensateur C1.

### étape 2.5

Pour tester le relais R3, l'unité de pilotage analyse alors l'intensité iₚₕ₂ du courant ayant circulé dans le circuit de phase 30b durant la phase de charge du condensateur C1. Si l'intensité iₚₕ₂ analysée est nulle, l'unité de pilotage procède au test de l'étape 2.6. En effet, cette intensité nulle signifie que le relais R3 fonctionne et est bien ouvert.

En revanche, si l'intensité iₚₕ₂ (ou la variation d'intensité diₚₕ₂/dt) analysée est non nulle, l'unité de pilotage indique à l'utilisateur que le relais R3 n'est plus fiable et qu'il doit être remplacé. En effet, cette intensité nulle signifie que le relais R3 est resté fermé.

### Etape 2.6

Pour tester le relais R2, l'unité de pilotage pilote les interrupteurs-hacheurs Tb1 et Ta2 en position fermée durant un court instant, ce qui a pour effet de faire circuler un courant depuis la batterie 1 via l'interrupteur-hacheur Tb1, le circuit de phase 30b, l'enroulement Eb, le relais R2 (si ce dernier est resté fermé), l'enroulement Ea, le circuit de phase 30a et l'interrupteur-hacheur Ta2.

Elle mesure ensuite l'intensité iₚₕ₁ (ou la variation d'intensité diₚₕ₁/dt) du courant circulant dans le circuit de phase 30a.

Si l'intensité iₚₕ₁ (ou la variation d'intensité diₚₕ₁/dt) mesurée est non nulle, l'unité de pilotage indique à l'utilisateur que le relais R2 n'est plus fiable et qu'il doit être remplacé. En effet, cette intensité non nulle signifie que le relais R2 est resté fermé.

Sinon, l'unité de pilotage indique à l'utilisateur que l'ensemble des relais est fiable et qu'il peut donc brancher le circuit électrique mixte 30 à la borne d'alimentation électrique 3 pour recharger la batterie 1.

Le procédé de pilotage et de diagnostic des relais R1' - R3 par l'unité de pilotage 40A sera maintenant décrit en référence au circuit électrique mixte 40 représenté sur les figures 6 et 7.

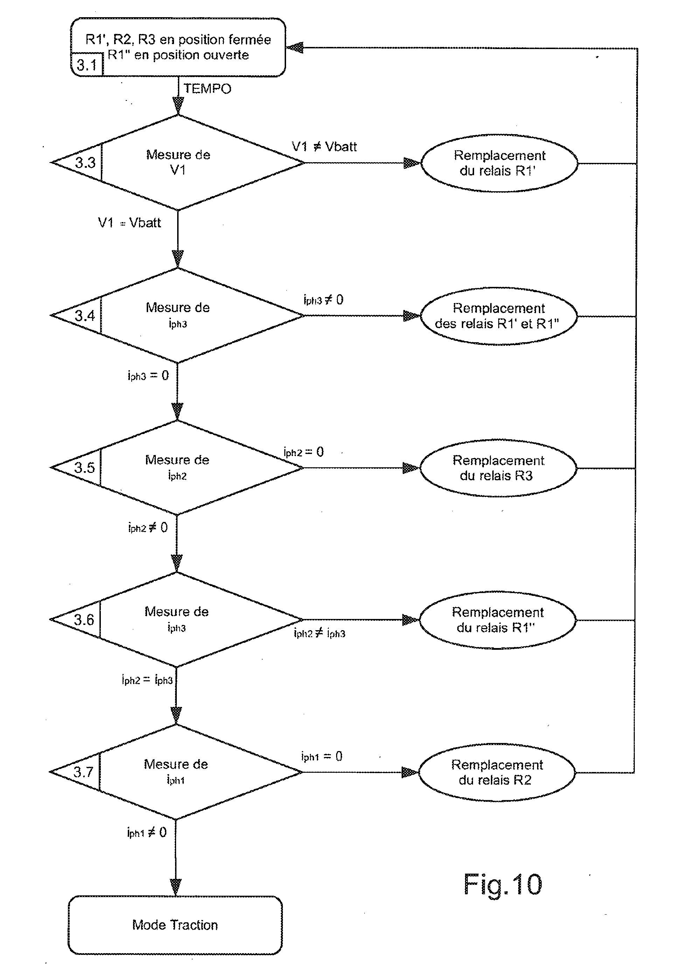

Plaçons nous tout d'abord dans le cas où l'on souhaite sélectionner le mode traction (figure 6). Le procédé de diagnostic, illustré sur la figure 10, comporte alors sept étapes successives permettant de déterminer si les quatre relais R1', R1", R2, R3 fonctionnent correctement.

### Etape 3.1

Au cours d'une première étape, l'unité de pilotage commande la fermeture des relais R1', R2 et R3 et l'ouverture du relais R1", pour les positionner en mode traction.

### Etape 3.2

Puis, l'unité de pilotage se met en attente, durant une durée déterminée supérieure ou égale au temps de charge du condensateur C1.

A ce stade, selon que les relais R1' et R1" fonctionnent ou non, on distingue 4 configurations possibles.

Dans une première configuration, les relais R1' et R1" sont fermés, auquel cas le relais R1" ne fonctionne plus. Dans cette configuration, le condensateur C1 se charge directement grâce à la batterie 1, via le relais R1'.

Dans une seconde configuration, les relais R1' et R1" sont ouverts, auquel cas le relais R1' ne fonctionne plus. Dans cette configuration, le condensateur C1 ne se charge pas.

Dans une troisième configuration, le relais R1' est ouvert et le relais R1" est fermé, auquel cas les relais R1' et R1" ne fonctionnent plus. Dans cette configuration, le condensateur C1 se charge grâce à la batterie 1, via le relais R1", l'enroulement Ec du moteur 2 et le circuit de phase 30c.

Dans une quatrième configuration, le relais R1" est ouvert et le relais R1' est fermé, auquel cas les relais R1' et R1" fonctionnent correctement. Dans cette configuration, le condensateur C1 se charge directement grâce à la batterie 1, via le relais R1'.

### Etape 3.3

Pour tester le relais R1', l'unité de pilotage mesure la différence de potentiels V1 aux bornes du condensateur C1. Si cette différence de potentiels V1 est différente de la différence de potentiels Vbatt aux bornes de la batterie 1, elle indique à l'utilisateur que le relais R1' n'est plus fiable et qu'il doit être remplacé. En effet, cette différence de potentiels signifie que le condensateur C1 n'a pas pu se charger et qu'on se trouve donc dans la seconde configuration. Le relais R1" est quant à lui fiable.

En revanche, si la différence de potentiels V1 est sensiblement égale à la différence de potentiels Vbatt aux bornes de la batterie 1, l'unité de pilotage procède au test de l'étape 3.4. En effet, cette différence de potentiels signifie seulement que le condensateur C1 a pu se charger et qu'on se trouve dans l'une des première, troisième et quatrième configurations. A ce stade, la position du relais R1' est donc encore indéterminée.

L'unité de pilotage mesure l'intensité iₚₕ₃ du courant circulant dans le circuit de phase 30c durant la phase de charge du condensateur C1.

### Etape 3.4

Toujours pour tester le relais R1', l'unité de pilotage analyse l'intensité iₚₕ₃ du courant ayant circulé dans le circuit de phase 30c durant la phase de charge du condensateur C1. Si l'intensité iₚₕ₃ mesurée est non nulle, l'unité de pilotage indique à l'utilisateur que les relais R1' et R1" ne sont plus fiables et qu'ils doivent être remplacés. En effet, cette intensité non nulle signifie que le relais R1' est resté ouvert et que le relais R1" est resté fermé.

En revanche, si l'intensité iₚₕ₃ mesurée est nulle, l'unité de pilotage procède au test de l'étape 3.5. En effet, cette intensité nulle signifie seulement que l'on se trouve dans l'une ou l'autre des première et quatrième configurations. A ce stade, on sait donc si le relais R1' fonctionne mais on ne connaît pas encore l'état ouvert ou fermé du relais R1".

### Etape 3.5

Pour tester le relais R3, l'unité de pilotage pilote les interrupteurs-hacheurs Tc1 et Tb2 en position fermée durant un court instant, ce qui a pour effet de faire circuler un courant depuis la batterie 1 via l'interrupteur-hacheur Tc1, le circuit de phase 30c, l'enroulement Ec, le relais R3 (si ce dernier est correctement fermé), l'enroulement Eb, le circuit de phase 30b et l'interrupteur-hacheur Tb2.

Elle mesure ensuite l'intensité Iₚₕ₂ (ou la variation d'intensité diₚₕ₂/dt) du courant circulant dans le circuit de phase 30b.

Si l'intensité iₚₕ₂ (ou la variation d'intensité diₚₕ₂/dt) mesurée est nulle, l'unité de pilotage indique à l'utilisateur que le relais R3 n'est plus fiable et qu'il doit être remplacé. En effet, cette intensité nulle signifie que le relais R3 est resté ouvert.

En revanche, si l'intensité iₚₕ₂ mesurée est non nulle, l'unité de pilotage procède au test de l'étape 3.6.

### Etape 3.6

Pour tester le relais R1", l'unité de pilotage mesure dans la configuration précédente l'intensité iₚₕ₃ du courant circulant dans le circuit de phase 30c.

Si l'intensité iₚₕ₃ mesurée est inférieure à l'intensité iₚₕ₂ préalablement mesurée, l'unité de pilotage indique à l'utilisateur que le relais R1" n'est plus fiable et qu'il doit être remplacé car il est resté fermé.

En revanche, si les intensités iₚₕ₂ et iₚₕ₃ mesurées sont égales, l'unité de pilotage procède au test de l'étape 3.7.

### Etape 3.7

Pour tester le relais R2, l'unité de pilotage procède de manière homologue, en pilotant les interrupteurs-hacheurs Tb1 et Ta2 en position fermée durant un court instant, ce qui a pour effet de faire circuler un courant depuis la batterie 1 via l'interrupteur-hacheur Tb1, le circuit de phase 30b, l'enroulement Eb, le relais R2 (si ce dernier est correctement fermé), l'enroulement Ea, le circuit de phase 30a et l'interrupteur-hacheur Ta2.

Elle mesure ensuite l'intensité iₚₕ₁ (ou la variation d'intensité diₚₕ₁/dt) du courant circulant dans le circuit de phase 30a.

Si l'intensité iₚₕ₁ (ou la variation d'intensité diₚₕ₁/dt) mesurée est nulle, l'unité de pilotage indique à l'utilisateur que le relais R2 n'est plus fiable et qu'il doit être remplacé. En effet, cette intensité nulle signifie que le relais R2 est resté ouvert.

Sinon, l'unité de pilotage indique à l'utilisateur que l'ensemble des relais est fiable et qu'il peut donc procéder à la mise en route du moteur triphasé 2, en mode traction.

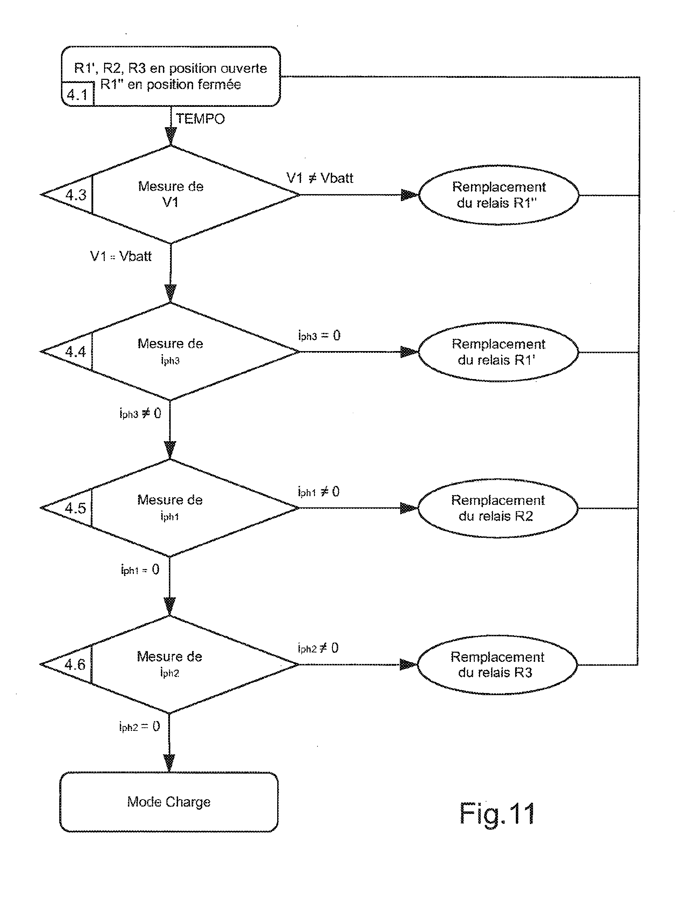

Plaçons nous maintenant dans le cas où l'on souhaite sélectionner le mode charge (figure 7). Le procédé de diagnostic, illustré sur la figure 11, comporte alors six étapes successives permettant de déterminer si les quatre relais R1', R1", R2, R3 fonctionnent correctement.

Préférentiellement, ce procédé est mis en oeuvre avant que le circuit électrique mixte 40 ne soit branché sur la borne d'alimentation électrique 3.

### Etape 4.1

Au cours d'une première étape, l'unité de pilotage commande l'ouverture des relais R1', R2 et R3 et la fermeture du relais R1", pour les positionner en mode charge.

### Etape 4.2

Puis l'unité de pilotage se met en attente, durant une durée supérieure ou égale au temps de charge du condensateur C1.

A ce stade, on distingue, comme à l'étape 3.2, quatre configurations possibles pour les relais R1' et R1".

Dans la première configuration, les relais R1' et R1" sont fermés, auquel cas le relais R1' ne fonctionne plus.

Dans la seconde configuration, les relais R1' et R1" sont ouverts, auquel cas le relais R1" ne fonctionne plus.

Dans la troisième configuration, le relais R1' est ouvert et le relais R1" est fermé, auquel cas les relais R1' et R1" fonctionnent correctement.

Dans la quatrième configuration, le relais R1" est ouvert et le relais R1' est fermé, auquel cas les relais R1' et R1" ne fonctionnent plus.

### Etape 4.3

Pour tester le relais R1", l'unité de pilotage mesure la différence de potentiels V1 aux bornes du condensateur C1. Si cette différence de potentiels V1 est différente de la différence de potentiels Vbatt aux bornes de la batterie 1, elle indique à l'utilisateur que le relais R1" n'est plus fiable et qu'il doit être remplacé. En effet, cette différence de potentiels signifie que le condensateur C1 n'a pas pu se charger et qu'on se trouve donc dans la seconde configuration.

En revanche, si la différence de potentiels V1 est sensiblement égale à la différence de potentiels Vbatt aux bornes de la batterie 1, l'unité de pilotage procède au test de l'étape 4.4.

L'unité de pilotage mesure l'intensité iₚₕ₃ du courant circulant dans le circuit de phase 30c durant la phase de charge du condensateur C1.

### Etape 4.4

Pour tester le relais R1', l'unité de pilotage analyse l'intensité iₚₕ₃ du courant ayant circulé dans le circuit de phase 30c durant la phase de charge du condensateur C1. Si l'intensité iₚₕ₃ mesurée est nulle, l'unité de pilotage indique à l'utilisateur que le relais R1' n'est plus fiable et qu'il doit être remplacé. En effet, cette intensité nulle signifie que le relais R1' est resté fermé.

En revanche, si l'intensité iₚₕ₃ mesurée est non nulle, l'unité de pilotage procède au test de l'étape 4.5. En effet, cette intensité non nulle signifie que les relais R1' et R1" fonctionnent correctement.

### Etape 4.5

Pour tester le relais R2, l'unité de pilotage pilote les interrupteurs-hacheurs Tb1 et Ta2 en position fermée durant un court instant, ce qui a pour effet de faire circuler un courant depuis la batterie 1 via l'interrupteur-hacheur Tb1, le circuit de phase 30b, l'enroulement Eb, le relais R2 (si ce dernier est resté fermé), l'enroulement Ea, le circuit de phase 30a et l'interrupteur-hacheur Ta2.

Elle mesure ensuite l'intensité iₚₕ₁ (ou la variation d'intensité diₚₕ₁/dt) du courant circulant dans le circuit de phase 30a.

Si l'intensité iₚₕ₁ (ou la variation d'intensité diₚₕ₁/dt) mesurée est non nulle, l'unité de pilotage indique à l'utilisateur que le relais R2 n'est plus fiable et qu'il doit être remplacé.

En revanche, si l'intensité iₚₕ₁ mesurée est nulle, ce qui signifie que le relais R2 fonctionne correctement, l'unité de pilotage procède au test de l'étape 4.6.

### Etape 4.6

Pour tester le relais R3, l'unité de pilotage procède de manière homologue, en pilotant les interrupteurs-hacheurs Tc1 et Tb2 en position fermée durant un court instant, ce qui a pour effet de faire circuler un courant depuis la batterie 1 via l'interrupteur-hacheur Tc1, le circuit de phase 30c, l'enroulement Ec, le relais R3 (si ce dernier est resté fermé), l'enroulement Eb, le circuit de phase 30b et l'interrupteur-hacheur Tb2.

Elle mesure ensuite l'intensité iₚₕ₂ (ou la variation d'intensité diₚₕ₂/dt) du courant circulant dans le circuit de phase 30b.

Si l'intensité iₚₕ₂ (ou la variation d'intensité diₚₕ₂/dt) mesurée est non nulle, l'unité de pilotage indique à l'utilisateur que le relais R3 n'est plus fiable et qu'il doit être remplacé.

Sinon, l'unité de pilotage indique à l'utilisateur que l'ensemble des relais est fiable et qu'il peut donc brancher le circuit électrique mixte 40 sur la borne d'alimentation électrique 3.

La présente invention n'est nullement limitée aux modes de réalisation décrits et représentés, mais l'homme du métier saura y apporter toute variante conforme à son esprit.

## Revendications

1. Circuit électrique mixte à fonction d'onduleur et de convertisseur alternatif-continu comprenant :
- quatre bras en parallèle présentant des extrémités (D, E) communes, dont un bras accumulateur (24) équipé d'un condensateur (C1) et trois bras interrupteurs (21, 22, 23) chacun équipés de deux couples d'interrupteurs hacheurs/diodes (Ta1, Da1 - Tc2, Dc2) branchés en série, de part et d'autre d'un point milieu (A, B, C),
- au moins une inductance (Ec),
- au moins trois interrupteurs-relais (R1, R2, R3 ; R1', R1") pour connecter, en mode onduleur, les points milieu (A, B, C) desdits trois bras interrupteurs (21, 22, 23) à des premières extrémités de trois enroulements (Ea, Eb, Ec) d'un moteur électrique triphasé (2) via trois circuits de phase (30a, 30b, 30c), les secondes extrémités des trois enroulements (Ea, Eb, Ec) entre eux et les extrémités (D, E) desdits trois bras interrupteurs (21, 22, 23) aux bornes d'une batterie d'accumulateurs (1), et pour connecter, en mode convertisseur alternatif-continu, les points milieu (A, B) d'un premier et d'un deuxième bras interrupteurs (21, 22) à un connecteur adapté à être branché à une source de tension monophasée (3) et le point milieu (C) d'un troisième bras interrupteur (23) à la batterie d'accumulateurs (1) par l'intermédiaire de ladite inductance (Ec), et
- une unité de pilotage (30A ; 40A) desdits interrupteurs-relais (R1, R2, R3 ; R1', R1 "), équipée de moyens de mesure de l'intensité (iₚₕ₁, iₚₕ₂, iₚₕ₃) du courant passant dans chaque circuit de phase (30a, 30b, 30c) et de la différence de potentiels (V1) aux bornes dudit condensateur (C1),
**caractérisé en ce que** l'unité de pilotage (30A ; 40A) est adaptée à déduire directement desdites intensités (iₚₕ₁, iₚₕ₂, iₚₕ₃) et de ladite différence de potentiels (V1) les états desdits interrupteurs-relais (R1, R2, R3 ; R1', R1").

2. Circuit électrique mixte selon la revendication précédente, dans lequel ladite inductance (Ec) est formée par l'un des trois enroulements (Ea, Eb, Ec) du moteur électrique triphasé (2).

3. Circuit électrique mixte selon l'une des revendications précédentes, dans lequel les deux premiers interrupteurs-relais (R2, R3) qui connectent, en mode convertisseur alternatif-continu, les points milieu (A, B) des premier et deuxième bras interrupteurs (21, 22) audit connecteur sont des relais bistables, aptes à présenter un état ouvert et un état fermé.

4. Circuit électrique mixte selon la revendication précédente, dans lequel le troisième interrupteur-relais (R1) est un relais tristable, apte à présenter un état ouvert et deux états fermés, dont un premier état fermé pour connecter la batterie d'accumulateurs (1) à l'une des extrémités (D, E) des trois bras interrupteurs (21, 22, 23) et un second état fermé pour connecter la batterie d'accumulateurs (1) au point milieu (C) du troisième bras interrupteur (23) par l'intermédiaire de ladite inductance (Ec) et d'un troisième desdits circuits de phase (30c).

5. Circuit électrique mixte selon la revendication précédente, dans lequel le troisième interrupteur-relais (R1') est un relais bistable, apte à présenter un état ouvert et un état fermé pour connecter la batterie d'accumulateurs (1) à l'une des extrémités (D, E) des trois bras interrupteurs (21, 22, 23), et dans lequel il est prévu un quatrième relais (R1 ") bistable, apte à présenter un état ouvert et un état fermé pour connecter la batterie d'accumulateurs (1) au point milieu (C) du troisième bras interrupteur (23) par l'intermédiaire de la première inductance (Ec) et d'un troisième desdits circuits de phase (30c).

6. Procédé de diagnostic de l'état des interrupteurs-relais (R1, R2, R3) d'un circuit électrique mixte selon la revendication 4, comportant, lors du passage en mode onduleur, les étapes consistant à :
a) commander les deux premiers interrupteurs-relais (R2, R3) en état fermé et le troisième interrupteur-relais (R1) en premier état fermé,
b) attendre que le condensateur (C1) se charge au moins en partie,
c) mesurer l'intensité (iₚₕ₃) du courant passant dans le troisième circuit de phase (30c) et la différence de potentiels (V1) aux bornes du condensateur (C1), et en déduire un diagnostic de fonctionnement du troisième interrupteur-relais (R1), et
d) mesurer les intensités (iₚₕ₁,iₚₕ₂) du courant passant dans les deux premiers circuits de phase (30a, 30b) et en déduire un diagnostic de fonctionnement des deux premiers interrupteurs-relais (R2, R3).

7. Procédé de diagnostic de l'état des interrupteurs-relais (R1, R2, R3) d'un circuit électrique mixte selon la revendication 4, comportant, lors du passage en mode convertisseur alternatif-continu, les étapes consistant à :
a) commander les deux premiers interrupteurs-relais (R2, R3) en état ouvert et le troisième interrupteur-relais (R1) en second état fermé,
b) attendre que le condensateur (C1) se charge au moins en partie,
c) mesurer l'intensité (iₚₕ₃) du courant passant dans le troisième circuit de phase (30c) et en déduire un diagnostic de fonctionnement du troisième interrupteur-relais (R1),
d) mesurer l'intensité (iₚₕ₁,iₚₕ₂) du courant passant dans les deux premiers circuits de phase (30a, 30b) et en déduire un diagnostic de fonctionnement des deux premiers interrupteurs-relais (R2, R3).

8. Procédé de diagnostic selon la revendication précédente, dans lequel si, à l'étape c), l'intensité (iₚₕ₃) mesurée est nulle, on mesure également la différence de potentiels (V1) aux bornes du condensateur (C1) pour en déduire si le troisième interrupteur-relais (R1) est bloqué en état ouvert ou en premier état fermé.

9. Procédé de diagnostic de l'état des interrupteurs-relais (R1', R1 ", R2, R3) d'un circuit électrique mixte selon la revendication 5, comportant, lors du passage en mode onduleur, les étapes consistant à :
a) commander la fermeture des trois premiers interrupteurs-relais (R1', R2, R3) et l'ouverture du quatrième interrupteur-relais (R1 "),
b) attendre que le condensateur (C1) se charge au moins en partie,
c) mesurer l'intensité (iₚₕ₃) du courant passant dans le troisième circuit de phase (30c) et la différence de potentiels (V1) aux bornes du condensateur (C1), et en déduire un diagnostic de fonctionnement du troisième interrupteur-relais (R1'),
d) mesurer l'intensité (iₚₕ₁,iₚₕ₂) du courant passant dans les deux premiers circuits de phase (30a, 30b) et en déduire un diagnostic de fonctionnement des deux premiers interrupteurs-relais (R2, R3),
e) comparer l'intensité (iₚₕ₃) du courant passant dans le troisième circuit de phase (30c) et l'intensité (iₚₕ₂) du courant passant dans l'un des deux premiers circuits de phase (30a, 30b) et en déduire un diagnostic de fonctionnement du quatrième interrupteur-relais (R1 ").

10. Procédé de diagnostic de l'état des interrupteurs-relais (R1', R1 ", R2, R3) d'un circuit électrique mixte selon la revendication 5, comportant, lors du passage en mode convertisseur alternatif-continu, les étapes consistant à :
a) commander l'ouverture des trois premiers interrupteurs-relais (R1', R2, R3) et la fermeture du quatrième interrupteur-relais (R1 "),
b) attendre que le condensateur (C1) se charge au moins en partie,
c) mesurer la différence de potentiels (V1) aux bornes du condensateur (C1) et en déduire un diagnostic de fonctionnement du quatrième interrupteur-relais (R1"),
d) mesurer l'intensité (iₚₕ₃) du courant passant dans le troisième circuit de phase (30c) et en déduire un diagnostic de fonctionnement du troisième interrupteur-relais (R1'),
e) mesurer l'intensité (iₚₕₗ, iₚₕ₂) du courant passant dans les deux premiers circuits de phase (30a, 30b) et en déduire un diagnostic de fonctionnement des deux premiers interrupteurs-relais (R2, R3).

11. Procédé de diagnostic selon l'une des revendications 7 et 10, dans lequel, lors du passage en mode convertisseur alternatif-continu, ledit connecteur est déconnecté de toute source de tension monophasée (3).

## Patentansprüche

1. Elektrischer Mischkreis mit Inverter- und AC/DC-Wandlerfunktion, der Folgendes aufweist:
- vier Parallelzweige, die gemeinsame Enden (D, E) aufweisen, darunter ein Akkumulatorzweig (24), der mit einem Kondensator (C1) ausgestattet ist, und drei Schalterzweige (21, 22, 23), die jeweils mit zwei Zerhacker/Diodenschalterpaaren (Ta1, Da1 - Tc2, Dc2) ausgestattet sind, die auf beiden Seiten eines Mittelpunkts (A, B, C) in Reihe geschaltet sind,
- mindestens eine Drosselspule (Ec),
- mindestens drei Relaisschalter (R1, R2, R3; R1', R1") zum Verbinden der Mittelpunkte (A, B, C) der drei Schalterzweige (21, 22, 23) mit ersten Enden von drei Wicklungen (Ea, Eb, Ec) eines Drehstromelektromotors (2) über drei Phasenkreise (30a, 30b, 30c), der zweiten Enden der drei Wicklungen (Ea, Eb, Ec) untereinander und der Enden (D, E) der drei Schalterzweige (21, 22, 23) mit den Klemmen einer Akkumulatoren-Batterie (1) im Invertermodus und zum Verbinden der Mittelpunkte (A, B) eines ersten und eines zweiten Schalterzweigs (21, 22) mit einem Verbinder, der angepasst ist, um an eine Einphasenspannungsquelle (3) angeschlossen zu werden, und des Mittelpunkts (C) eines dritten Schalterzweigs (23) mit der Akkumulatoren-Batterie (1) über die Drosselspule (Ec) im AC/DC-Wandlermodus, und
- eine Einheit (30A; 40A) zur Steuerung der Relaisschalter (R1, R2, R3; R1', R1''), die mit Mitteln zur Messung der Stärke (iₚₕ₁, iₚₕ₂, iₚₕ₃) des Stroms, der in jedem Phasenkreis (30a, 30b, 30c) fließt, und der Potenzialdifferenz (V1) an den Klemmen des Kondensators (C1) ausgestattet ist,
**dadurch gekennzeichnet, dass** die Steuereinheit (30A; 40A) angepasst ist, um direkt von den Stärken (iₚₕ₁, iₚₕ₂, iₚₕ₃) und der Potenzialdifferenz (V1) die Zustände der Relaisschalter (R1, R2, R3; R1'; R1") abzuleiten.

2. Elektrischer Mischkreis nach dem vorhergehenden Anspruch, wobei die Drosselspule (Ec) durch eine der drei Wicklungen (Ea, Eb, Ec) des DrehstromElektromotors (2) gebildet ist.

3. Elektrischer Mischkreis nach einem der vorhergehenden Ansprüche, wobei die zwei ersten Relaisschalter (R2, R3), die die Mittelpunkte (A, B) des ersten und zweiten Schalterzweigs (21, 22) im AC/DC-Wandlermodus mit dem Verbinder verbinden, bistabile Relais sind, die geeignet sind, einen offenen und einen geschlossenen Zustand aufzuweisen.

4. Elektrischer Mischkreis nach dem vorhergehenden Anspruch, wobei der dritte Relaisschalter (R1) ein tristabiles Relais ist, das geeignet ist, einen offenen und zwei geschlossene Zustände aufzuweisen, darunter einen ersten geschlossenen Zustand zum Verbinden der Akkumulatoren-Batterie (1) mit einem der Enden (D, E) der drei Schalterzweige (21, 22, 23) und einen zweiten geschlossenen Zustand zum Verbinden der Akkumulatoren-Batterie (1) mit dem Mittelpunkt (C) des dritten Schalterzweigs (23) über die Drosselspule (Ec) und einen dritten der Phasenkreise (30c).

5. Elektrischer Mischkreis nach dem vorhergehenden Anspruch, wobei der dritte Relaisschalter (R1') ein bistabiles Relais ist, das geeignet ist, einen offenen und einen geschlossenen Zustand aufzuweisen, um die Akkumulatoren-Batterie (1) mit einem der Enden (D, E) der drei Schalterzweige (21, 22, 23) zu verbinden, und wobei ein viertes bistabiles Relais (R1") vorgesehen ist, das geeignet ist, einen offenen Zustand und einen geschlossenen Zustand aufzuweisen, um die Akkumulatoren-Batterie (1) mit dem Mittelpunkt (C) des dritten Schalterzweigs (23) über die erste Drosselspule (Ec) und einen dritten der Phasenkreise (30c) zu verbinden.

6. Verfahren zur Diagnose des Zustands der Relaisschalter (R1, R2, R3) eines elektrischen Mischkreises nach Anspruch 4, das beim Übergang in den Invertermodus die Schritte aufweist, die aus Folgendem bestehen:
a) Steuern der zwei ersten Relaisschalter (R2, R3) in den geschlossenen Zustand und des dritten Relaisschalters (R1) in den ersten geschlossenen Zustand,
b) Warten, bis der Kondensator (C1) sich mindestens teilweise auflädt,
c) Messen der Stärke (iₚₕ₃) des Stroms, der in dem dritten Phasenkreis (30c) fließt, und der Potentialdifferenz (V1) an den Klemmen des Kondensators (C1) und davon Ableiten einer Diagnose des Betriebs des dritten Relaisschalters (R1), und
d) Messen der Stärken (iₚₕ₁, iₚₕ₂) des Stroms, der in den zwei ersten Phasenkreisen (30a, 30b) fließt, und davon Ableiten einer Diagnose des Betriebs der zwei ersten Relaisschalter (R2, R3).

7. Verfahren zur Diagnose des Zustands der Relaisschalter (R1, R2, R3) eines elektrischen Mischkreises nach Anspruch 4, das beim Übergang in den AC/DC-Wandlermodus die Schritte aufweist, die aus Folgendem bestehen:
a) Steuern der zwei ersten Relaisschalter (R2, R3) in den offenen Zustand und des dritten Relaisschalters (R1) in den zweiten geschlossenen Zustand,
b) Warten, bis der Kondensator (C1) sich mindestens teilweise auflädt,
c) Messen der Stärke (iₚₕ₃) des Stroms, der in dem dritten Phasenkreis (30c) fließt, und davon Ableiten einer Diagnose des Betriebs des dritten Relaisschalters (R1),
d) Messen der Stärke (iₚₕ₁, iₚₕ₂) des Stroms, der in den zwei ersten Phasenkreisen (30a, 30b) fließt, und davon Ableiten einer Diagnose des Betriebs der zwei ersten Relaisschalter (R2, R3).

8. Diagnoseverfahren nach dem vorhergehenden Anspruch, wobei, wenn im Schritt c) die gemessene Stärke (iₚₕ₃) null ist, auch die Potentialdifferenz (V1) an den Kondensatorklemmen (C1) gemessen wird, um davon abzuleiten, ob der dritte Relaisschalter (R1) im offenen Zustand oder im ersten geschlossenen Zustand gesperrt ist.

9. Verfahren zur Diagnose des Zustands der Relaisschalter (R1', R1", R2, R3) eines elektrischen Mischkreises nach Anspruch 5, das beim Übergang in den Invertermodus die Schritte aufweist, die aus Folgendem bestehen:
a) Steuern des Schließens der drei ersten Relaisschalter (R1', R2, R3) und der Öffnung des vierten Relaisschalters (R1''),
b) Warten, bis der Kondensator (C1) sich mindestens teilweise auflädt,
c) Messen der Stärke (iₚₕ₃) des Stroms, der in dem dritten Phasenkreis (30c) fließt, und der Potentialdifferenz (V1) an den Klemmen des Kondensators (C1) und davon Ableiten einer Diagnose des Betriebs des dritten Relaisschalters (R1'),
d) Messen der Stärke (iₚₕ₁, iₚₕ₂) des Stroms, der in den zwei ersten Phasenkreisen (30a, 30b) fließt und davon Ableiten einer Diagnose des Betriebs der zwei ersten Relaisschalter (R2, R3),
e) Vergleichen der Stärke (iₚₕ₃) des Stroms, der in dem dritten Phasenkreis (30c) fließt, und der Stärke (iₚₕ₂) des Stroms, der in einem der zwei ersten Phasenkreise (30a, 30b) fließt und davon Ableiten einer Diagnose des Betriebs des vierten Relaisschalters (R1").

10. Verfahren zur Diagnose des Zustands der Relaisschalter (R1', R1 ", R2, R3) eines elektrischen Mischkreises nach Anspruch 5, das beim Übergang in den AC/DC-Wandlermodus die Schritte aufweist, die aus Folgendem bestehen:
a) Steuern der Öffnung der drei ersten Relaisschalter (R1', R2, R3) und des Schließens des vierten Relaisschalters (R1"),
b) Warten, bis der Kondensator (C1) sich mindestens teilweise auflädt,
c) Messen der Potentialdifferenz (V1) an den Klemmen des Kondensators (C1) und davon Ableiten einer Diagnose des Betriebs des vierten Relaisschalters (R1"),
d) Messen der Stärke (iₚₕ₃) des Stroms, der im dritten Phasenkreis (30c) fließt, und davon Ableiten einer Diagnose des Betriebs des dritten Relaisschalters (R1'),
e) Messen der Stärke (iₚₕ₁, iₚₕ₂) des Stroms, der in den zwei ersten Phasenkreisen (30a, 30b) fließt, und davon Ableiten einer Diagnose des Betriebs der zwei ersten Relaisschalter (R2, R3).

11. Diagnoseverfahren nach einem der Ansprüche 7 und 10, wobei beim Übergang in den AC/DC-Wandlermodus der Verbinder von jeder Einphasenspannungsquelle (3) getrennt wird.

## Claims

1. Mixed electrical circuit with inverter and AC/DC converter function comprising:
- four parallel arms with common ends (D, E), including one accumulator arm (24) equipped with a capacitor (C1) and three switch arms (21, 22, 23) each equipped with two pairs of chopper switches/diodes (Ta1, Da1 - Tc2, Dc2) connected in series, on either side of a centre tap (A, B, C),
- at least one inductance (Ec),
- at least three relay switches (R1, R2, R3; R1', R1") for connecting, in inverter mode, the centre taps (A,B,C) of said three switch arms (21, 22, 23) to first ends of three coils (Ea, Eb, Ec) of a three-phase electric motor (2) via three phase circuits (30a, 30b, 30c), the second ends of the three coils (Ea, Eb, Ec) to each other and the ends (D, E) of said three switch arms (21,22,23) to the terminals of an accumulator battery (1), and for connecting, in AC/DC converter mode, the centre taps (A, B) of a first and of a second switch arm (21, 22) to a connector suitable for being connected to a single-phase voltage source (3) and the centre tap (C) of a third switch arm (23) to the accumulator battery (1) by way of said inductance (Ec), and
- a unit (30A; 40A) for controlling said relay switches (R1, R2, R3; R1, R1''), equipped with means for measuring the intensity (iₚₕ₁, iₚₕ₂, iₚₕ₃) of the current passing through each phase circuit (30a, 30b, 30c) and the potential difference (V1) across the terminals of said capacitor (C1),
**characterized in that** the control unit (30A; 40A) is suitable for deducing directly from said intensities (iₚₕ₁, iₚₕ₂, iₚₕ₃) and from said potential difference (V1) the states of said relay switches (R1, R2, R3; R1, R1") .

2. Mixed electrical circuit according to the preceding claim, in which said inductance (Ec) is formed by one of the three coils (Ea, Eb, Ec) of the three-phase electric motor (2).

3. Mixed electrical circuit according to one of the preceding claims, in which the first relay switches (R2, R3) which connect, in AC/DC converter mode, the centre taps (A, B) of the first and of the second switch arms (21, 22) to said connector are bi-stable relays, able to have one open state and one closed state.

4. Mixed electrical circuit according to the preceding claim, in which the third relay switch (R1) is a tri-stable relay, able to have one open state and two closed states, including one first closed state for connecting the accumulator battery (1) to one of the ends (D, E) of the three switch arms (21,22,23) and a second closed state for connecting the accumulator battery (1) to the centre tap (C) of the third switch arm (23) by way of said inductance (Ec) and of a third of said phase circuits (30c).

5. Mixed electrical circuit according to the preceding claim, in which the third relay switch (R1' ) is a bi-stable relay, able to have one open state and one closed state for connecting the accumulator battery (1) to one of the ends (D,E) of the three switch arms (21,22,23) and in which a fourth bi-stable relay (R1") is provided, able to have one open state and one closed state for connecting the accumulator battery (1) to the centre tap (C) of the third switch arm (23) by way of the first inductance (Ec) and of a third of said phase circuits (30c).

6. Method for diagnosing the state of the relay switches (R1, R2, R3) of a mixed electrical circuit according to Claim 4, including, during the switch to inverter mode, the steps consisting in:
a) controlling the first two relay switches (R2, R3) in the closed state and the third relay switch (R1) in the first closed state,
b) waiting for the capacitor (C1) to charge at least in part,
c) measuring the intensity (iₚₕ₃) of the current passing through the third phase circuit (30c) and the potential difference (V1) across the terminals of the capacitor (C1), and deducing therefrom a functional diagnostic of the third relay switch (R1), and
d) measuring the intensities (iₚₕ₁, iₚₕ₂) of the current passing through the first two phase circuits (30a, 30b) and deducing therefrom a functional diagnostic of the first two relay switches (R2, R3).

7. Method for diagnosing the state of the relay switches (R1, R2, R3) of a mixed electrical circuit according to Claim 4, including, during the switch to AC/DC converter mode, the steps consisting in:
a) controlling the first two relay switches (R2, R3) in the open state and the third relay switch (R1) in the second closed state,
b) waiting for the capacitor (C1) to charge at least in part,
c) measuring the intensity (iₚₕ₃) of the current passing through the third phase circuit (30c) and deducing therefrom a functional diagnostic of the third relay switch (R1),
d) measuring the intensity (iₚₕ₁, iₚₕ₂) of the current passing through the first two phase circuits (30a, 30b) and deducing therefrom a functional diagnostic of the first two relay switches (R2, R3).

8. Diagnostic method according to the preceding claim, in which if, in step c), the intensity (iₚₕ₃) measured is nil, the potential difference (V1) across the terminals of the capacitor (C1) is also measured to deduce therefrom whether the third relay switch (R1) is blocked in the open state or in the first closed state.

9. Method for diagnosing the state of the relay switches (R1', R1", R2, R3) of a mixed electrical circuit according to Claim 5, including, during the switch to inverter mode, the steps consisting in:
a) controlling the closing of the first three relay switches (R1', R2, R3) and the opening of the fourth relay switch (R1''),
b) waiting for the capacitor (C1) to charge at least in part,
c) measuring the intensity (iₚₕ₃) of the current passing through the third phase circuit (30c) and the potential difference (V1) across the terminals of the capacitor (C1), and deducing therefrom functional diagnostic of the third relay switch (R1'),
d) measuring the intensity (iₚₕ₁, iₚₕ₂) of the current passing through the first two phase circuits (30a, 30b) and deducing therefrom a functional diagnostic of the first two relay switches (R2, R3),
e) comparing the intensity (iₚₕ₃) of the current passing through the third phase circuit (30c) and the intensity (iₚₕ₂) of the current passing through one of the first two phase circuits (30a, 30b) and deducing therefrom a functional diagnostic of the fourth relay switch (R1") .

10. Method for diagnosing the state of the relay switches (R1', R1 ", R2, R3) of a mixed electrical circuit according to Claim 5, including, during the switch to AC-DC converter mode, the steps consisting in:
a) controlling the opening of the first three relay switches (R1', R2, R3) and the closing of the fourth relay switch (R1"),
b) waiting for the capacitor (C1) to charge at least in part,
c) measuring the potential difference (V1) across the terminals of the capacitor (C1) and deducing therefrom a functional diagnostic of the fourth relay switch (R2'').
d) measuring the intensity (iₚₕ₃) of the current passing through the third phase circuit (30c) and deducing therefrom a functional diagnostic of the third relay switch (R1'),
e) measuring the intensity (iₚₕ₁, iₚₕ₂ of the current passing through the first two phase circuits (30a, 30b) and deducing therefrom a functional diagnostic of the first two relay switches (R2, R3).

11. Diagnostic method according to one of Claims 7 and 10, in which, during the switch to AC/DC converter mode, said connector is disconnected from all sources of single-phase voltage (3).
